# EUROPÄISCHE PATENTANMELDUNG

(11) **EP 4 775 821 A1**
(43) Veröffentlichungstag der Anmeldung: **15.07.2026**
(21) Anmeldenummer: 26150876.6
(22) Anmeldetag: 08.01.2026
(51) Int. Cl.: F02C 7/14, F02C 7/224, F28F 9/02, F28F 19/00

(54) **WÄRMETAUSCHERVORRICHTUNG FÜR EIN FLUGZEUGTRIEBWERK MIT EINEM TREIBSTOFF-ÖL-WÄRMEÜBERTRAGER**

(30) Priorität: 14.01.2025 DE 102025000113
(71) Anmelder: Rolls-Royce Deutschland Ltd & Co KG, 15827 Blankenfelde-Mahlow (DE)
(72) Erfinder: BLUMRICH, Markus, 15827 Blankenfelde-Mahlow (DE)

(57) **Zusammenfassung**

Es werden eine Wärmetauschervorrichtung (1) für ein Flugzeugtriebwerk und ein Gasturbinentriebwerk vorgeschlagen. Die Wärmetauschervorrichtung (1) umfasst einen Treibstoff-Öl-Wärmeübertrager (2) zum indirekten Übertragen von thermischer Energie zwischen Treibstoff (T) und Öl (OE). Weiterhin ist ein Zulaufbereich (6) des Treibstoff-Öl-Wärmeübertragers (2) für den Treibstoff (T) vorgesehen, der von einer vom Treibstoff (T) durchströmbaren Frontplatte (8) des Treibstoff-Öl-Wärmeübertragers (2) und einem gegenüberliegenden Gehäusebereich (9) begrenzt ist. Ein Ablaufbereich (10) des Treibstoff-Öl-Wärmeübertragers (2) ist auf einer dem Zulaufbereich (6) abgewandten Seite des Treibstoff-Öl-Wärmeübertragers (2) angeordnet. Treibstoff (T) ist durch eine parallel zum Treibstoff-Öl-Wärmeübertrager (2) verlaufende Bypassleitung (4) mit einem Bypassventil (11) zum Steuern des Treibstoffvolumenstromes führbar. Zumindest ein Teil des Ölstromes (OE), der durch den Treibstoff-Öl-Wärmeübertrager (2) führbar ist, ist stromauf des Treibstoff-Öl-Wärmeübertragers (2) durch den Gehäusebereich (9) leitbar, um thermische Energie zwischen dem den Gehäusebereich (9) durchströmenden Ölvolumen (OE) und dem Treibstoff (T) im Zulaufbereich (6) indirekt übertragen zu können.

## Beschreibung

Die vorliegende Offenbarung betrifft eine Wärmetauschervorrichtung für ein Flugzeugtriebwerk mit einem Treibstoff-Öl-Wärmeübertrager gemäß der im Oberbegriff des Patentanspruches 1 näher definierten Art.

Bekannterweise werden Flugzeugtriebwerke auch bei Umgebungstemperarturen unterhalb des Gefrierpunkts von Wasser betrieben. Dies führt während ungünstiger Betriebszustände von Flugtriebwerken dazu, dass vom Treibstoff mitgeführtes Wasser aus dem flüssigen Zustand in den festen Zustand übergeht und in Form von Eis im Kraftstoffsystem abgeschieden wird. Wenn sich im Betrieb zu viel Eis bildet und den Strömungsweg des Treibstoffes verstopft, kann einem Flugtriebwerk nicht mehr die aktuell erforderliche Treibstoffmenge zugeführt werden, was unter Umständen einen Stillstand des Flugtriebwerkes zur Folge hat.

Um die Anforderungen an die instationäre Vereisung zu erfüllen, die Teil der Zulassungsvorschriften für Triebwerke und Flugzeuge ist, weisen moderne Flugtriebwerke bzw. Gasturbinentriebwerke sogenannte Treibstoff-Öl-Wärmeübertrager auf, in deren Bereich versucht wird, die Betriebstemperatur des Treibstoffs mittels thermischer Energie, die von einem Ölkreislauf des Flugtriebwerkes zur Verfügung gestellt wird, auf Werte oberhalb des Gefrierpunktes des vom Treibstoff mitgeführten Wassers einzustellen.

Falls die Vereisung im Kraftstoffsystem die Durchströmung eines solchen Treibstoff-Öl-Wärmeübertragers verhindert, gibt ein Bypass-Ventil eine den Treibstoff-Öl-Wärmeübertrager umgehende Bypassleitung frei. Um diesen zusätzlichen Strömungsweg für den Treibstoff aufrecht zu erhalten, wird in der US 9 823 030 B1 vorgeschlagen, ein solches Bypassventil beheizbar auszuführen.

Problematisch dabei ist jedoch, dass im Betrieb über längere Zeiträume abgeschiedenes Eis trotz des beheizbaren Bypassventils auch den Strömungsweg durch die Bypassleitung blockiert.

Um ein Blockieren einer Zuleitung eines Treibstoffsystems durch auskristallisiertes Eis zu vermeiden, durch die Treibstoff einem Treibstoff-Öl-Wärmeübertrager zuführbar ist, weist eine aus der US 9 016 351 B2 bekannte Vorrichtung zum Vorwärmen des Treibstoffs stromauf des Treibstoff-Öl-Wärmeübertragers eine Anzahl von Rohren auf, die in mindestens einer Ebene angeordnet sind, welche die Strömungsrichtung des Treibstoffs schneidet.

Die im Strömungsweg des Treibstoffs angeordneten und vom Treibstoff umströmten Rohre beeinflussen die Strömung des Treibstoffs über den gesamten Betriebsbereich des mit der Vorrichtung ausgeführten Treibstoffkühlsystems, was den Wirkungsgrad des nachgeschalteten Treibstoff-Öl-Wärmeübertragers beeinträchtigt und daher unerwünscht ist. Der geringere Wirkungsgrad bedingt eine größere Dimensionierung des Treibstoff-Öl-Wärmeübertragers, was jedoch den Bauraumbedarf sowie die Herstellkosten des Treibstoff-Öl-Wärmeübertragers erhöht.

Der vorliegenden Offenbarung liegt die Aufgabe zugrunde, eine konstruktiv einfache sowie bauraum- und kostengünstige Wärmetauschervorrichtung für Flugzeugtriebwerke mit einem Treibstoff-Öl-Wärmeübertrager zu schaffen, mittels der eine Kraftstoffversorgung auch während ungünstiger Betriebszustandsverläufe gewährleistet ist.

Diese Aufgabe wird mit einer Wärmetauschervorrichtung mit den Merkmalen des Patentanspruches 1 gelöst.

Die Wärmetauschervorrichtung für ein Flugzeugtriebwerk gemäß der vorliegenden Offenbarung umfasst einen Treibstoff-Öl-Wärmeübertrager zum indirekten Übertragen von thermischer Energie zwischen Treibstoff und Öl. Ein Zulaufbereich des Treibstoff-Öl-Wärmeübertragers, durch den dem Treibstoff-Öl-Wärmeübertragers Treibstoff zuführbar ist, ist von einer vom Treibstoff durchströmbaren Frontplatte des Treibstoff-Öl-Wärmeübertragers und einem gegenüberliegenden Gehäusebereich begrenzt. Zudem ist ein Ablaufbereich für den Treibstoff vorgesehen, der aus dem Treibstoff-Öl-Wärmeübertrager austritt. Der Ablaufbereich ist auf einer dem Zulaufbereich abgewandten Seite des Treibstoff-Öl-Wärmeübertragers angeordnet. Weiterhin ist Treibstoff durch eine parallel zum Treibstoff-Öl-Wärmeübertrager verlaufende Bypassleitung mit einem Bypassventil zum Steuern des Treibstoffstromes parallel zum Treibstoff-Öl-Wärmeübertrager durch die Bypassleitung führbar.

Zumindest ein Teil des Ölstromes, der durch den Treibstoff-Öl-Wärmeübertrager führbar ist, ist stromauf des Treibstoff-Öl-Wärmeübertragers durch den Gehäusebereich leitbar und thermische Energie ist zwischen dem Ölvolumen, das den Gehäusebereich durchströmt, und dem im Zulaufbereich befindlichen Treibstoff indirekt übertragbar.

Dies bietet insbesondere während Betriebszustandsverläufen der Wärmetauschervorrichtung, während den zumindest ein Teil des vom Treibstoff mitgeführten Wassers gefriert und den Treibstoff-Öl-Wärmeübertrager verstopft, die Möglichkeit, den Treibstoff mittels des Öls zu erwärmen und vor allem das gefrorene Wasser innerhalb kurzer Betriebszeiten zu schmelzen sowie den Strömungsweg des Treibstoffs im Zulaufbereich wieder vom Eis zu befreien, bevor auch die Bypassleitung vom Eis zugesetzt wird.

Dabei wird auf einfache Art und Weise eine Beeinträchtigung der laminaren Strömung des Treibstoffes in nicht vereisten Betriebszuständen des Zulaufbereiches durch die Übertragung von thermischer Energie ausgehend vom Öl im Gehäusebereich auf den im Inneren des Zulaufbereiches befindlichen Treibstoff vermieden. Dies ist der Fall, da die indirekte Erwärmung des Treibstoffes sowie des vom Treibstoff mitgeführten Wassers ausgehend vom Gehäusebereich und nicht wie bei bekannten Lösungen ausgehend von den Strömungsquerschnitt des Treibstoffes durchquerenden Leitungen erfolgt. Dadurch ist der Treibstoff im nicht vereisten Normalzustand des Zulaufbereiches dem Treibstoff-Öl-Wärmeübertrager mit laminarer Strömung zuführbar und in diesen mit geringen Strömungsverlusten einleitbar, wodurch der Treibstoff-Öl-Wärmeübertrager mit hohem Wirkungsgrad betreibbar ist. Dies ermöglicht den Treibstoff-Öl-Wärmeübertrager und dadurch auch die Wärmetauschervorrichtung bauraum- und kostengünstig auszuführen.

Wenn ein Auslass des vom Öl durchströmbaren Gehäusebereiches mit dem Treibstoff-Öl-Wärmeübertrager in Fluidverbindung steht und das Öl nach dem Gehäusebereich durch den Treibstoff-Öl-Wärmeübertrager strömt, weist die Wärmetauschervorrichtung einen konstruktiv einfach Aufbau auf und ein Ölkreislauf eines Flugtriebwerkes ist mit einer niedrigen Anzahl an Übergabeschnittstellen realisierbar, wodurch lediglich ein geringer Dichtaufwand entsteht.

Bei einer ebenfalls bauraum- und kostengünstigen Weiterbildung der Wärmetauschervorrichtung gemäß der vorliegenden Offenbarung, bei der zudem die Strömung des Treibstoffes stromauf des Treibstoff-Öl-Wärmeübertragers nicht beeinflusst wird, ist zumindest ein Teil des Ölstromes, der durch den Treibstoff-Öl-Wärmeübertrager führbar ist, durch eine Frontplatte des Treibstoff-Öl-Wärmeübertragers leitbar. Dies bietet die Möglichkeit, stromauf des Treibstoff-Öl-Wärmeübertragers zusätzlich thermische Energie zwischen dem im Zulaufbereich befindlichen Treibstoff und dem durch die Frontplatte geführten Ölstrom indirekt zu übertragen. Damit können Vereisungszustände des Zulaufbereiches innerhalb kurzer Betriebszeiten aufgelöst und Treibstoffunterversorgungen eines Flugtriebwerkes vermieden sowie der Treibstoff-Öl-Wärmeübertrager mit hohem Wirkungsgrad betrieben werden.

Darüber hinaus kann es vorgesehen sein, dass ein Auslassbereich des vom Öl durchströmbaren Bereiches der Frontplatte mit dem Bereich des Treibstoff-Öl-Wärmeübertragers in Fluidverbindung steht, der vom Öl durchströmt wird. Dann ist die Wärmetauschervorrichtung konstruktiv einfach ausführbar und ein Treibstoffkreislauf eines Flugtriebwerkes ist mit einer niedrigen Anzahl an Übergabeschnittstellen realisierbar, wodurch wiederum ein geringer Dichtaufwand entsteht.

Wenn die Bypassleitung direkt vom Einlass des Zulaufbereiches abzweigt, dann weist die Wärmetauschervorrichtung einen geringen Bauraumbedarf auf. Des Weiteren ist bei dieser Ausführungsform der Wärmetauschervorrichtung solange Treibstoff durch die Bypassleitung führbar, bis das Aufnahmevermögen des Zulaufbereiches von Eis überschritten wird und auskristallisiertes Eis auch die Bypassleitung zusetzt. Dies kann jedoch mit geringem Aufwand durch entsprechende Dimensionierung des Volumens des Zulaufbereiches und der vom Öl in das Innere des Zulaufbereiches übertragbaren thermischen Energiemenge vermieden werden.

Die Menge des auskristallisierten Wassers bzw. des Eises, ab der sowohl durch den vereisten Zulaufbereich des Treibstoff-Öl-Wärmetauschers und auch durch den vereisten Strömungsquerschnitt der Bypassleitung eine Treibstoffversorgung eines Flugtriebwerkes beeinträchtigt ist, ist gegen über der letztgenannten Ausführungsform der Wärmetauschervorrichtung höher, wenn die Bypassleitung stromauf eines Einlasses des Zulaufbereiches des Treibstoff-Öl-Wärmeübertragers von einer in den Zulaufbereich mündenden Zulaufleitung abzweigt.

Die Bypassleitung kann auf konstruktiv einfache Weise in den Ablaufbereich oder stromab des Ablaufbereiches in eine vom Ablaufbereich abzweigende Treibstoffleitung münden.

Wenn ein Gehäuse des Bypassventils beheizbar ausgeführt ist, dann kann ein Vereisen des Bypassventils sowie eine Treibstoffunterversorgung eines Flugtriebwerkes auf einfache Art und Weise verhindert werden.

Der Gehäusebereich, der den Zulaufbereich begrenzt, ist bei einer bauraumgünstigen Ausführungsform, bei der Vereisungszustände durch die vom Öl übertragenden thermischen Energie innerhalb kurzer Betriebszeiten auflösbar sind, kuppelförmig ausgebildet.

Wenn der Gehäusebereich an seiner Innenseite die Wärmeaustauschfläche mit dem Inneren des Zulaufbereiches vergrößernde Elemente, vorzugsweise von der Innenseite des Gehäusebereiches in den Innenraum des Zulaufbereiches vorkragende Rippen aufweist, können Vereisungszustände des Zulaufbereiches wiederum innerhalb kurzer Betriebszeiten aufgelöst und Treibstoffunterversorgungen eines Flugtriebwerkes vermieden werden.

Das Volumen des Zulaufbereichs kann in Abhängigkeit von der thermischen Energie, die vom Öl, das durch den Gehäusebereich geführt wird, im Zulaufbereich indirekt auf den Treibstoff übertragbar ist, sowie von einer im Zulaufbereich aufzunehmenden Eismenge ausgelegt sein, die aus dem Treibstoff auskristallisiert und bis zu der eine Vereisung der Bypassleitung unterbleibt.

Weiterhin besteht die Möglichkeit, das Volumen des Zulaufbereichs in Abhängigkeit von der thermischen Energie auszulegen, die vom Ölstrom, der durch die Frontplatte geführt wird, im Zulaufbereich indirekt auf den Treibstoff übertragbar ist.

Ein weiterer Aspekt der vorliegenden Offenbarung betrifft ein Gasturbinentriebwerk, insbesondere ein Flugtriebwerk, das mit einer vorstehend näher beschriebenen Wärmetauschervorrichtung ausgeführt ist.

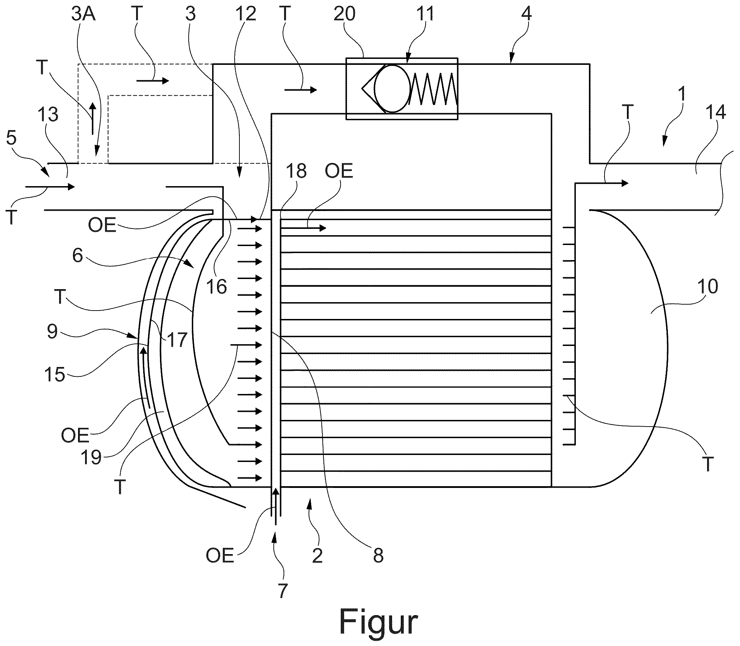

Die Erfindung ist nicht auf die angegebenen Kombinationen der Merkmale der unabhängigen Ansprüche oder der hiervon abhängigen Ansprüche beschränkt. Es ergeben sich im Rahmen der Ansprüche darüber hinaus Möglichkeiten, einzelne Merkmale, soweit sie aus den Ansprüchen, der nachfolgenden Beschreibung von Ausführungsformen oder unmittelbar aus der Zeichnung hervorgehen, miteinander zu kombinieren. Die Bezugnahme der Ansprüche auf die Zeichnungen durch die Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ausführungsbeispiele der Erfindung werden ohne hierauf beschränkt zu sein, anhand der Zeichnung näher erläutert.

Die einzige Figur der Zeichnung zeigt eine vereinfachte Schnittansicht bevorzugter Ausführungsformen der Wärmetauschervorrichtung gemäß der vorliegenden Offenbarung.

In der Figur ist eine Schnittansicht zweier Ausführungsformen einer Wärmetauschervorrichtung 1 eines Flugzeugtriebwerkes, insbesondere eines Gasturbinentriebwerkes mit einem Treibstoff-Öl-Wärmeübertrager 2 zum indirekten Übertragen von thermischer Energie zwischen einem Treibstoff T und Öl OE dargestellt. Das Gasturbinentriebwerk kann in beliebiger Art und Weise ausgeführt sein. Die beiden Ausführungsformen unterscheiden sich lediglich dadurch, dass ein Abzweigungsbereich 3 einer Bypassleitung 4 für den Treibstoff T an verschiedenen Stellen eines Treibstoffkreislaufes 5 und jeweils stromauf eines kuppelförmigen Zulaufbereiches 6 des Treibstoff-Öl-Wärmeübertragers 2 vorgesehen ist, durch den dem Treibstoff-Öl-Wärmeübertrager 2 Treibstoff T zugeführt wird.

Im Normalbetrieb strömt der Treibstoff T aus dem Zulaufbereich 6 in den Treibstoff-Öl-Wärmeübertrager 2. Im Bereich des Treibstoff-Öl-Wärmeübertragers 2 wird thermische Energie vom üblicherweise wärmeren Öl OE, das ebenfalls durch den Treibstoff-Öl-Wärmeübertrager 2 geführt wird, indirekt auf den Treibstoff T übertragen. Damit ist der Treibstoff-Öl-Wärmeübertrager 2 auch Bestandteil eines Ölkreislaufes 7 des Flugtriebwerkes .

Der Zulaufbereich 6 des Treibstoff-Öl-Wärmeübertragers 2 wird von einer vom Treibstoff T durchströmbaren Frontplatte 8 des Treibstoff-Öl-Wärmeübertragers 2 und einem gegenüberliegenden Gehäusebereich 9 begrenzt. Ein Ablaufbereich 10 des Treibstoff-Öl-Wärmeübertragers 2 für den Treibstoff T liegt stromab des Bereiches des Treibstoff-Öl-Wärmeübertragers 2, in dem der Treibstoff T thermische Energie mit dem Öl OE austauscht.

Während ungünstiger Betriebszustandsverläufe der Wärmetauschervorrichtung besteht die Möglichkeit, dass vom Treibstoff T mitgeführtes Wasser temperaturbedingt auskristallisiert und Eiskristalle sich im Zulaufbereich 6 anreichern. Dies führt unter Umständen dazu, dass der Treibstoff-Öl-Wärmeübertrager 2 vom gefrorenen Wasser verstopft wird und kein Treibstoff T mehr durch den Treibstoff-Öl-Wärmeübertrager 2 führbar ist. Um eine Treibstoffunterversorgung des mit der Wärmetauschervorrichtung 1 ausgeführten Flugtriebwerkes zu vermeiden, umfasst die parallel zum Treibstoff-Öl-Wärmeübertrager 2 verlaufende Bypassleitung 4, die je nach Anwendungsfall in den Ablaufbereich 10 oder stromab des Ablaufbereiches 10 in eine vom Ablaufbereich 10 abzweigende Treibstoffleitung 14 mündet, ein Bypassventil 11 zum Steuern des Treibstoffstromes durch die Bypassleitung 4. Das Bypassventil 11 geht in den geöffneten Zustand über und gibt die Bypassleitung 4 frei, sobald der Zulaufdruck des Treibstoffes T einen Schwellwert übersteigt.

Bei der ersten Ausführungsform der Wärmetauschervorrichtung 1 zweigt die die Bypassleitung 4 direkt vom Einlass 12 des Zulaufbereiches 6 ab. Dadurch wird gewährleistet, dass Treibstoff T auch dann durch die Bypassleitung 4 führbar ist, selbst wenn das gesamte Volumen des Zulaufbereiches 6 mit Eiskristallen zugesetzt ist.

Sollte jedoch das Volumen des Zulaufbereiches 10 beispielsweise wegen mangelndem Bauraum nicht ausreichend sein, um die sich während ungünstiger Betriebszustandsverläufe bildende Eiskristallmenge vollständig aufzunehmen, besteht die Gefahr, dass auch eine Zulaufleitung 13 stromauf des Einlasses 12 sowie die Bypassleitung 4 vom Eis bzw. sich bildenden Schnee verstopft werden. Dann ist das Flugtriebwerk auf Dauer nicht mehr im erforderlichen Umfang mit Treibstoff versorgbar. Um ein solches Szenario zu vermeiden, zweigt die Bypassleitung 4 bei der zweiten Ausführungsform der Wärmetauschervorrichtung 1 bereits in einem Bereich 3A der in den Zulaufbereich 6 mündenden Zulaufleitung 13 ab, der vom Einlass 12 beabstandet ist und stromauf des Einlasses 12 des Zulaufbereiches 6 des Treibstoff-Öl-Wärmeübertragers 2 liegt. Dieser Verlauf der Bypassleitung 4 ist in der Figur durch strichliert ausgeführte Linien dargestellt und bietet die Möglichkeit, das für die Aufnahme des auskristallisierten Wassers zur Verfügung stehende Volumen stromauf des Treibstoff-Öl-Wärmeübertragers 2 zu vergrößern, ohne den Bauraumbedarf des Zulaufbereiches 6 zu vergrößern.

Um Vereisungszustände der Wärmetauschervorrichtung 1 im Zulaufbereich 6 innerhalb möglichst kurzer Betriebszeiten auflösen zu können, ein vollständiges Zusetzen des Treibstoff-Öl-Wärmetauschers 2 zu verhindern oder zumindest zu verzögern sowie die während ungünstiger Betriebszustandsverläufe entstehende Eismenge, ab der eine Treibstoffunterversorgung des Flugtriebwerkers zu erwarten ist, begrenzen zu können, ist ein Teil des Ölstromes OE, der durch den Treibstoff-Öl-Wärmeübertrager 2 führbar ist, stromauf des Treibstoff-Öl-Wärmeübertragers durch eine Wandung 15 des Gehäusebereiches 9 leitbar. Dies bietet die Möglichkeit, thermische Energie zwischen dem den Gehäusebereich 9 durchströmenden Ölvolumen OE und dem Treibstoff T sowie dem auskristallisierten Wasser bzw. der Eiskristalle im Zulaufbereich 6 indirekt zu übertragen und gegebenenfalls gefrorenes Wasser zu schmelzen.

Der vom Öl OE durchströmbare Bereich des Gehäusebereiches 9 steht über einen Auslass 16 des Gehäusebereiches 9 mit dem Bereich des Treibstoff-Öl-Wärmeübertragers 2 in Fluidverbindung, der vom Öl OE durchströmt wird, um dem Treibstoff T zwischen dem Zulaufbereich 6 und dem Ablaufbereich 10 thermische Energie zuführen zu können. Zusätzlich ist auch Öl OE durch die Frontplatte 8 führbar, um den im Zulaufbereich 6 befindlichen Treibstoff T und gegebenenfalls gefrorenes Wasser zu erwärmen bzw. zu schmelzen. Das durch die Frontplatte 8 geführte Öl OE wird aus der Frontplatte 8 über einen Auslassbereich 18 in den Treibstoff-Öl-Wärmeübertrager 2 eingeleitet.

Bei dieser Ausführungsform der Wärmetauschervorrichtung 1 ist sowohl ausgehend vom Gehäusebereich 9 als auch ausgehend von der Frontplatte 8 thermische Energie des Öls OE indirekt in den Zulaufbereich 6 einleitbar. Dadurch ist eine effektive Temperierung des Treibstoffs T möglich und Vereisungszustände des Zulaufbereiches 6 sind innerhalb kurzer Betriebszeiten auflösbar sowie Verstopfungen des Treibstoff-Öl-Wärmeübertragers 2 vermeidbar.

Um einen möglichst guten Wärmeübergang zwischen dem Gehäusebereich 9 und dem Treibstoff T sowie gefrorenem Wasser zu erreichen, kann der Gehäusebereich 9 an seiner den Zulaufbereich 6 begrenzenden Innenseite 17 die Wärmeaustauschfläche vergrößernde Elemente 19 aufweisen. Die Elemente 19 können beispielsweise als Rippen oder dergleichen ausgebildet sein, die von der Innenseite 17 des Gehäusebereiches 9 in den Innenraum des Zulaufbereiches 6 vorkragen.

Zusätzlich dazu besteht auch die Möglichkeit, dass ein Gehäuse 19 des Bypassventils 11 beheizbar ausgeführt ist. Dann kann ein Vereisen des Bypassventils 11 durch auskristallisiertes Wasser, das bei geöffnetem Bypassventil 11 in die Bypassleitung 4 eingeleitet wird, auf einfache Art und Weise verhindert werden. Hierfür besteht beispielsweise die Möglichkeit, das Gehäuse 20 mit dem durch den Treibstoff-Öl-Wärmeübertrager 2, den Gehäusebereich 9 und/oder die Frontplatte 8 geführtem Öl zu beheizen.

### Bezugszeichenliste

- 1: Wärmetauschervorrichtung
- 2: Treibstoff-Öl-Wärmeübertrager
- 3: Abzweigungsbereich
- 3A: Bereich der Zulaufleitung
- 4: Bypassleitung
- 5: Treibstoffkreislauf
- 6: Zulaufbereich
- 7: Ölkreislauf
- 8: Frontplatte
- 9: Gehäusebereich
- 10: Ablaufbereich
- 11: Bypassventil
- 12: Einlass
- 13: Zulaufleitung
- 14: Treibstoffleitung
- 15: Wandung des Gehäusebereiches
- 16: Auslass des Gehäusebereiches
- 17: Innenseite des Gehäusebereiches
- 18: Auslassbereich der Frontplatte
- 19: Element
- 20: Gehäuse des Bypassventils
- OE: Ölstrom
- T: Treibstoffstrom

## Patentansprüche

1. Wärmetauschervorrichtung (1) für ein Flugzeugtriebwerk mit einem Treibstoff-Öl-Wärmeübertrager (2) zum indirekten Übertragen von thermischer Energie zwischen Treibstoff (T) und Öl (OE), mit einem Zulaufbereich (6) des Treibstoff-Öl-Wärmeübertragers (2) für den Treibstoff (T), der von einer vom Treibstoff (T) durchströmbaren Frontplatte (8) des Treibstoff-Öl-Wärmeübertragers (2) und einem gegenüberliegenden Gehäusebereich (9) begrenzt ist, und mit einem Ablaufbereich (10), der auf einer dem Zulaufbereich (6) abgewandten Seite des Treibstoff-Öl-Wärmeübertragers (2) angeordnet ist, wobei Treibstoff (T) durch eine parallel zum Treibstoff-Öl-Wärmeübertrager (2) verlaufende Bypassleitung (4) mit einem Bypassventil (11) zum Steuern des Treibstoffvolumenstromes (T) durch die Bypassleitung (4) führbar ist, **dadurch gekennzeichnet, dass** zumindest ein Teil des Ölstromes (OE), der durch den Treibstoff-Öl-Wärmeübertrager (2) führbar ist, stromauf des Treibstoff-Öl-Wärmeübertragers (2) durch den Gehäusebereich (9) leitbar und thermische Energie zwischen dem den Gehäusebereich (9) durchströmenden Ölvolumen (OE) und dem Treibstoff (T) im Zulaufbereich (6) indirekt übertragbar ist.

2. Wärmetauschervorrichtung nach Anspruch 1, **dadurch gekennzeichnet, dass** ein Auslass (16) des vom Öl (OE) durchströmbaren Gehäusebereiches (9) mit dem Treibstoff-Öl-Wärmeübertrager (2) in Fluidverbindung steht.

3. Wärmetauschervorrichtung nach Anspruch 1 oder 2, **dadurch gekennzeichnet, dass** durch eine Frontplatte (8) des Treibstoff-Öl-Wärmeübertragers (2) zumindest ein Teil des Ölstromes (OE) leitbar ist, der durch den Treibstoff-Öl-Wärmeübertrager (2) führbar ist, und stromauf des Treibstoff-Öl-Wärmeübertragers (2) thermische Energie zwischen dem im Zulaufbereich (6) befindlichen Treibstoff (T) und dem durch die Frontplatte (8) geführten Ölstrom (OE) indirekt übertragbar ist.

4. Wärmetauschervorrichtung nach Anspruch 3, **dadurch gekennzeichnet, dass** ein Auslassbereich (18) des vom Öl (OE) durchströmbaren Bereiches der Frontplatte (8) mit dem Treibstoff-Öl-Wärmeübertrager (2) in Fluidverbindung steht.

5. Wärmetauschervorrichtung nach einem der Ansprüche 1 bis 4, **dadurch gekennzeichnet, dass** die Bypassleitung (4) direkt vom Einlass (12) des Zulaufbereiches (6) abzweigt.

6. Wärmetauschervorrichtung nach einem der Ansprüche 1 bis 4, **dadurch gekennzeichnet, dass** die Bypassleitung (4) stromauf eines Einlasses (12) des Zulaufbereiches (6) des Treibstoff-Öl-Wärmeübertragers (2) von einer in den Zulaufbereich (6) mündenden Zulaufleitung (13) abzweigt.

7. Wärmetauschervorrichtung nach einem der vorstehenden Ansprüche, **dadurch gekennzeichnet, dass** die Bypassleitung (4) in den Ablaufbereich (10) oder stromab des Ablaufbereiches (10) in eine vom Ablaufbereich (10) abzweigende Treibstoffleitung (14) mündet.

8. Wärmetauschervorrichtung nach einem der vorstehenden Ansprüche, **dadurch gekennzeichnet, dass** ein Gehäuse (20) des Bypassventils (11) beheizbar ausgeführt ist.

9. Wärmetauschervorrichtung nach einem der vorstehenden Ansprüche, **dadurch gekennzeichnet, dass** der Gehäusebereich (9), der den Zulaufbereich (6) begrenzt, kuppelförmig ausgebildet ist.

10. Wärmetauschervorrichtung nach einem der vorstehenden Ansprüche, **dadurch gekennzeichnet, dass** der Gehäusebereich (9) an seiner Innenseite (17) die Wärmeaustauschfläche vergrößernde Elemente (19), vorzugsweise von der Innenseite (17) des Gehäusebereiches (9) in den Innenraum des Zulaufbereiches (6) vorkragende Rippen aufweist.

11. Wärmetauschervorrichtung nach einem der vorstehenden Ansprüche, **dadurch gekennzeichnet, dass** das Volumen des Zulaufbereichs (6) in Abhängigkeit von der thermischen Energie, die vom Öl (OE), das durch den Gehäusebereich (9) geführt wird, im Zulaufbereich (6) indirekt auf den Treibstoff (T) übertragbar ist, sowie von einer im Zulaufbereich (6) aufzunehmenden Eismenge ausgelegt ist, die aus dem Treibstoff (T) auskristallisiert und bis zu der eine Vereisung der Bypassleitung (4) unterbleibt.

12. Wärmetauschervorrichtung nach Anspruch 11, **dadurch gekennzeichnet, dass** das Volumen des Zulaufbereichs (6) in Abhängigkeit von der thermischen Energie, die vom Ölstrom (OE), der durch die Frontplatte (8) geführt wird, im Zulaufbereich (6) indirekt auf den Treibstoff (T) übertragbar ist, ausgelegt ist.

13. Gasturbinentriebwerk, insbesondere Flugtriebwerk, das mit einer Wärmetauschervorrichtung (1) gemäß einem der Ansprüche 1 bis 12 ausgeführt ist.
